# FASCICULE DE BREVET EUROPEEN

(11) **EP 1 564 070 B1**
(45) Date de publication et mention de la délivrance du brevet: **14.05.2008**
(21) Numéro de dépôt: 04290282.5
(22) Date de dépôt: 03.02.2004
(51) Int. Cl.: B60P 3/40

(54) **Module arrière de véhicule automobile**
Heckmodul eines Kraftfahrzeugs
Rear module for a motor vehicle

(43) Date de publication de la demande: 17.08.2005
(73) Titulaire: COMPAGNIE PLASTIC OMNIUM, 69007 Lyon (FR)
(72) Inventeur: Andre, Gérald, 01500 Amberieu en Bugey (FR); Delavalle, Dominique, 01160 Pont d'Ain (FR)
(74) Mandataire: de la Bigne, Guillaume Michel Marie

(56) Documents cités:
- EP-A- 0 661 202
- FR-A- 2 771 697
- GB-A- 2 218 384
- US-B1- 6 199 894

## Description

La présente invention concerne un module arrière de véhicule automobile du type destiné à prolonger la caisse dudit véhicule en étant fixé à cette dernière et à supporter des ouvrants arrière et un pare-chocs arrière.

Un tel module est divulgué dans le document FR 2 771 697.

Il est connu de l'état de la technique de monter sur une base de caisse commune différents modules arrière afin d'obtenir, à coût réduit, une grande diversité de véhicules de formes arrière différentes.

Un tel module et son procédé d'assemblage associé sont par exemple décrits dans le document US 4,968,087.

Cet état de la technique présente plusieurs inconvénients. Tout d'abord le module arrière constitue une partie importante de la caisse et représente par conséquent une part non négligeable du poids de la structure portante finale. De plus, la différenciation entre véhicules ayant des formes arrière différentes s'effectue lors de la fabrication de la caisse, c'est-à-dire très en amont dans la chaîne de montage. Ceci oblige à prendre des dispositions spécifiques très en amont dans la chaîne de montage des véhicules et par conséquent la diversité entre véhicules s'avère coûteuse.

Dans le but de pallier ces problèmes, l'invention vise à fournir un module arrière de véhicule automobile offrant une réduction substantielle du poids de la structure portante et pouvant être intégré au véhicule en fin de montage de ce dernier.

A cet effet, l'invention a pour objet un module arrière de véhicule automobile du type précité caractérisé en ce qu'il comprend un cadre en matière plastique comportant des moyens de fixation à la caisse et des moyens de fixation des ouvrants, et en ce qu'il comprend des prolonges de longerons du véhicule.

Un module arrière selon l'invention peut en outre comporter l'une ou plusieurs des caractéristiques suivantes :
- le cadre est en matière composite ;
- les prolonges sont fixées sous le cadre ;
- les prolonges sont incorporées dans le cadre ;
- la caisse comprend des moyens de fixation des ouvrants arrière du véhicule ;
- les moyens de fixation du cadre à la caisse se fixent aux moyens de fixation des ouvrants de la caisse.

L'invention sera mieux comprise à la lecture de la description qui va suivre, donnée uniquement à titre d'exemple et faite en se référant aux dessins annexés dans lesquels :
- la figure 1 représente le procédé de montage d'ouvrants arrière d'un véhicule automobile selon l'état de la technique ;
- la figure 2 représente le procédé de montage d'un module arrière de véhicule automobile selon un mode de réalisation de l'invention.

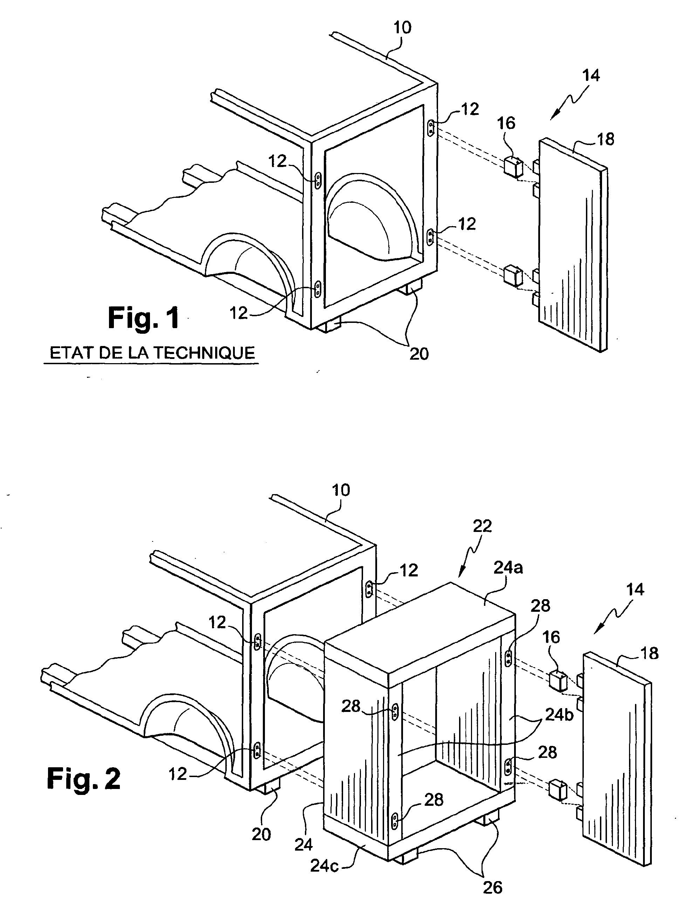

On a représenté sur la figure 1 l'arrière d'une caisse 10 d'un véhicule automobile.

La caisse 10 comprend de manière classique des moyens 12 de fixation d'ouvrants arrière 14 du véhicule. Par exemple, il s'agit de trous dans la caisse destinés à recevoir une vis fixée par un écrou.

Les ouvrants arrière 14 peuvent prendre un grand nombre de formes. On ne décrira ici que le cas où les ouvrants arrière sont deux portes. Par soucis de clarté, un seul côté des ouvrants sera représenté sur les figures.

Ainsi, les ouvrants arrière 14 comprennent des charnières 16 destinées à être fixées sur la caisse 10, et une porte 18 destinée à s'agencer avec les charnières 16.

Afin d'assurer une rigidité suffisante au véhicule, deux longerons 20 sont disposés de manière classique sous la caisse 10.

On a représenté sur la figure 2 un module arrière 22 comprenant un cadre en matière plastique 24 et des prolonges 26 des longerons du véhicule.

Le cadre 24 est constitué d'une partie supérieure 24A, de deux parties verticales 24B et d'une partie inférieure 24C, toutes les trois en matière plastique, par exemple thermoplastique.

Le cadre 24 comporte des moyens de fixation (non représentés) coopérant avec les moyens 12 de fixation de la caisse, pour solidariser les deux éléments.

Le cadre 24 comporte en outre des moyens 28 de fixation des ouvrants arrière 14.

Dans l'exemple décrit, ces moyens de fixation 28 sont identiques aux moyens de fixation 12. Dans d'autres modes de réalisation, le module arrière 22 peut être destiné à porter des types d'ouvrants différents de ceux initialement destinés à la caisse 10.

Les prolonges 26 sont préférentiellement en forme de U et constituées de matière métallique.

Une fois fixé, le module 22 prolonge la caisse 10 du véhicule ainsi que les longerons 20.

Le module est destiné à porter également des éléments de carrosserie (non représentés), ainsi qu'un pare-chocs arrière (non représenté) grâce à des fixations qui, comme pour les ouvrants, sont identiques à celles permettant de fixer le pare-chocs directement sur la caisse. Les prolonges 26 telles que définies dans l'invention permettent la transmission des efforts appliqués sur le pare-chocs aux longerons 20.

L'invention ne se limite pas au mode de réalisation décrit.

En particulier, la caisse 10 peut ne pas être destinée à recevoir d'ouvrants arrière 14, mais être destinée à recevoir un module 22 selon l'invention. Dans ce cas, la caisse 10 et le module arrière 22 comprendront des moyens de fixation spécifique complémentaires.

En variante, le cadre arrière 24 peut être en matière composite.

Dans une autre variante, les prolonges de longeron 26 sont intégrées dans la partie inférieure 24C du cadre arrière 24.

## Revendications

1. Module arrière (22) de véhicule automobile destiné à prolonger la caisse (10) dudit véhicule en étant fixé à cette dernière et à supporter des ouvrants arrière (14) et un pare-chocs arrière, **caractérisé en ce qu**'il comprend un cadre en matière plastique (24) comportant des moyens de fixation à la caisse et des moyens de fixation (28) des ouvrants (14), **et en ce qu'**il comprend des prolonges (26) de longerons (20) du véhicule.

2. Module arrière selon la revendication 1, dans lequel le cadre est en matière composite.

3. Module arrière selon l'une quelconque des revendications 1 ou 2, dans lequel les prolonges (26) sont fixées sous le cadre (24).

4. Module arrière selon l'une quelconque des revendications 1 ou 2, dans lequel les prolonges (26) sont incorporées dans le cadre (24).

5. Module arrière selon l'une quelconque des revendications 1 à 4, dans lequel la caisse (10) comprend des moyens de fixation (12) des ouvrants arrière (14) du véhicule.

6. Module arrière selon la revendication 5, dans lequel les moyens de fixation du cadre (24) à la caisse (10) se fixent aux moyens de fixation (12) des ouvrants (14) de la caisse (10).

## Claims

1. A motor vehicle rear module (22) for extending the body (10) of said vehicle by being fastened thereto, and for supporting rear doors (14) and a rear bumper, the module being **characterized in that** it comprises a frame (24) of plastics material including means for fastening to the body, and fastener means (28) for the doors (14), and **in that** it includes extenders (26) for extending side rails (20) of the vehicle.

2. A rear module according to claim 1, in which the frame is made of composite material.

3. A rear module according to claim 1 or claim 2, in which the extenders (26) are fastened beneath the frame (24).

4. A rear module according to claim 1 or claim 2, in which the extenders (26) are incorporated in the frame (24).

5. A rear module according to any one of claims 1 to 4, in which the body (10) includes fastener means (12) for rear doors (14) of the vehicle.

6. A rear module according to claim 5, in which the fastener means for fastening the frame (24) to the body (10) engage the fastener means (12) for fastening doors (14) to the body (10).

## Patentansprüche

1. Heckmodul (22) eines Kraftfahrzeugs, das zur Verlängerung der Karosserie (10) des Fahrzeugs vorgesehen ist, wobei es an dieser Karosserie befestigt wird, und rückseitige Öffnungseinrichtungen (14) und einen hinteren Stoßfänger tragen soll, **dadurch gekennzeichnet, dass** es einen Rahmen aus Kunststoff (24) umfasst, der Mittel zum Befestigen an der Karosserie und Mittel zum Befestigen (28) der Öffnungsvorrichtungen (14) aufweist, und dass er Verlängerungen (26) von Längsträgern (20) des Fahrzeugs umfasst.

2. Heckmodul nach Anspruch 1, in dem der Rahmen aus Verbundmaterial ausgeführt ist.

3. Heckmodul nach einem der Ansprüche 1 oder 2, in dem die Verlängerungen (26) unter dem Rahmen (24) befestigt sind.

4. Heckmodul nach einem der Ansprüche 1 oder 2, in dem die Verlängerungen (26) in den Rahmen (24) eingebaut sind.

5. Heckmodul nach einem der Ansprüche 1 bis 4, in dem die Karosserie (10) Mittel zum Befestigen (12) der rückseitigen Öffnungseinrichtungen (14) des Fahrzeugs umfasst.

6. Heckmodul nach Anspruch 5, in dem die Mittel zum Befestigen des Rahmens (24) an der Karosserie (10) an den Befestigungsmitteln (12) für die Öffnungseinrichtungen (14) der Karosserie (10) befestigt werden.
